# EUROPEAN PATENT APPLICATION

(11) **EP 3 647 372 A1**
(43) Date of publication of application: **06.05.2020**
(21) Application number: 18823653.3
(22) Date of filing: 27.06.2018
(51) Int. Cl.: C08L 77/10, B32B 27/34, C08J 5/18, C08K 3/00, H01G 9/02, H01G 11/52, H01M 2/16

(54) **HIGH-CONCENTRATION PARTICLE-CONTAINING FILM AND METHOD FOR PRODUCING SAME**

(30) Priority: 28.06.2017 JP 2017126193
(71) Applicant: Teijin Limited, Osaka-shi, Osaka 530-0005 (JP)
(72) Inventor: AKAMATSU, Tetsuya, Osaka-shi Osaka 530-0005 (JP)
(74) Representative: Jackson, Richard Eric
(86) International application number: PCT/JP2018/024437
(87) International publication number: WO 2019/004303

(57) **Abstract**

The invention provides a high-concentration particle-containing film that contains a large amount of particles while having excellent flexibility.

The high-concentration particle-containing film of the invention comprises a para-copolymerized aromatic polyamide obtained by copolymerization of para-phenylenediamine, a copolymerizing diamine and para-terephthaloyl dichloride, and particles, wherein the weight proportion of the copolymerizing diamine is in the range of 25 to 75 wt% of the entire diamine component and the particles are present at 55 vol% or greater, and the copolymerizing diamine is 3,3'-oxydiphenylenediamine, 3,4'-oxydiphenylenediamine or 4,4'-oxydiphenylenediamine.

## Description

### FIELD

The present invention relates to a high-concentration particle-containing film containing particles at a high concentration, and more specifically it relates to a high-concentration particle-containing film that is suitable as a material for electronic parts.

### BACKGROUND

Films made of high molecular polymers are widely used in materials for electronic parts such as batteries, condensers and electrical double layer capacitors. For separators that are to be used as barrier materials between battery electrodes, for example, the required properties include conductivity while holding electrolytes, a high shielding property between electrodes, and low internal resistance. Secondary batteries with large electric capacitance, in particular, must have minimal heat release and ignition when short-circuited.

Particles are also commonly added to films made of such high molecular polymers, in order to impart various functions. However, a problem results when large amounts of particles and especially large amounts of hard inorganic particles are added to provide high functionality, because the film will generally become hard and brittle, making it much more difficult to handle.

One strategy to counter this has been to coat one side of the film with the particles, instead of adding them into the film.

In PTL 1, for example, one side of a polyethylene porous membrane is coated with a hydrophilic resin that contains ceramic particles, while the opposite side is coated with a para-aromatic polyamide (para-aramid), as a separator material to serve as a barrier material between electrodes. In this case, the para-aromatic polyamide must have a low molecular weight for dissolution in a polar solvent that will allow coating of the para-aromatic polyamide (NMP or DMAC, for example), but this leads to other problems because the dispersed solution that is obtained has low stability and the polymer tends to quickly precipitate out as a solid, and it consequently becomes difficult to control the stability of the coating film (for example, the stability in terms of film thickness, homogeneity of components and film strength), and to control the coating step as well.

When particles have been disposed at high concentration, it has led to problems such as deterioration of the flexibility of the film.

Furthermore, with a polyolefin porous substrate alone, which are commonly used as separator materials, it has been difficult to meet the requirements for separators in terms of the thermal properties of the materials. Methods are therefore employed which use highly heat-resistant functional layers coated onto such a substrate. Inorganic fine particle layers are an example of a type of highly heat-resistant layer that is used.

However, since it is difficult to form a highly heat-resistant layer with inorganic fine particles alone, it has been the practice to use a polymer as the binder between particles and to coat a thin-film of the inorganic fine particle-containing polymer onto the substrate. Aromatic polyamides (hereunder also referred to as "aramids"), for example, have been used because polymers serving as binders also require high heat resistance.

An example of a common aromatic polyamide is poly-paraphenylene terephthalamide (PTL 2). However, because such polymers are poorly soluble in organic solvents, it has been extremely difficult to prepare coating solutions that contain particles, and especially as inorganic fine particles, at high concentration. Furthermore, even when the polymer has successfully dissolved, the molecules, being liquid crystalline, tend to form domains in the solution which are in a non-homogeneous phase that is difficult to redisperse, resulting in poor storage stability of the solution.

### [CITATION LIST]

### [PATENT LITERATURE]

[PTL 1] Japanese Unexamined Patent Publication No. 2012-54230
[PTL 2] Japanese Unexamined Patent Publication HEI No. 10-279795

### SUMMARY

### [TECHNICAL PROBLEM]

It is an object of the present invention to solve the problems of the prior art described above by providing a high-concentration particle-containing film that contains large amounts of particles while also having excellent flexibility, as well as a method for producing the same.

### [SOLUTION TO PROBLEM]

<Aspect 1>
   A high-concentration particle-containing film comprising:
   a para-copolymerized aromatic polyamide obtained by copolymerization of para-phenylenediamine, a copolymerizing diamine and para-terephthaloyl dichloride, and
   particles,
   wherein the weight proportion of the copolymerizing diamine is in the range of 25 to 75 wt% of the entire diamine component and the particles are present at 55 vol% or greater, and
   the copolymerizing diamine is 3,3'-oxydiphenylenediamine, 3,4'-oxydiphenylenediamine or 4,4'-oxydiphenylenediamine.
<Aspect 2>
   The film according to aspect 1, wherein the particle content is 55 vol% to 98 vol%.
<Aspect 3>
   The film according to aspect 1 or 2, wherein the number-average molecular weight of the para-copolymerized aromatic polyamide is 10,000 to 150,000.
<Aspect 4>
   The film according to aspect 3, wherein the number-average molecular weight of the para-copolymerized aromatic polyamide is 20,000 to 80,000.
<Aspect 5>
   The film according to any one of aspects 1 to 4, wherein the intrinsic viscosity of the para-copolymerized aromatic polyamide is 1.5 to 2.6, as the intrinsic viscosity measured at 30°C for a solution in 98% concentrated sulfuric acid with a polymer concentration of 0.5 g/dl.
<Aspect 6>
   The film according to any one of aspects 1 to 5, wherein the particles are inorganic particles.
<Aspect 7>
   A laminate that includes a film according to any one of aspects 1 to 6, and a substrate.
<Aspect 8>
   The laminate according to aspect 7, wherein the substrate is a nonwoven fabric or a porous film.
<Aspect 9>
   A separator for a lithium ion secondary battery, which includes a film according to any one of aspects 1 to 6.
<Aspect 10>
   A method for producing a film according to any one of aspects 1 to 6, wherein a treatment solution containing a para-copolymerized aromatic polyamide, particles and an organic solvent, in which the proportion of particles constituting the solid portion of the para-copolymerized aromatic polyamide and the particles in the treatment solution is 66 wt% or greater, is applied onto a substrate to form a film.
<Aspect 11>
   A method for producing a laminate according to aspect 7 or 8, wherein a treatment solution containing a para-copolymerized aromatic polyamide, particles and an organic solvent, in which the proportion of particles constituting the solid portion of the para-copolymerized aromatic polyamide and the particles in the treatment solution is 66 wt% or greater, is applied onto a substrate and integrated with it.
<Aspect 12>
   The method according to aspect 10 or 11, wherein the proportion of particles constituting the solid portion of the treatment solution is 75 to 99 wt%.
<Aspect 13>
   A separator for a lithium ion secondary battery, which includes a laminate according to aspect 7 or 8.
<Aspect 14>
   The use of a film according to any one of aspects 1 to 6 or a laminate according to aspect 7 or 8 as a separator in a lithium ion secondary battery.

### [ADVANTAGEOUS EFFECTS OF INVENTION]

According to the invention there is provided a high-concentration particle-containing film that contains a large amount of particles while having excellent flexibility, as well as a method for producing it.

### BRIEF DESCRIPTION OF DRAWINGS

FIG. 1 is a scanning electron microscope (SEM) photograph of a cross-section of the film of Example 1 of the invention.
FIG. 2 is a magnified photograph 1 of a cross-section of the film of Example 1 of the invention.
FIG. 3 is a magnified photograph 2 of a cross-section of the film of Example 1 of the invention.

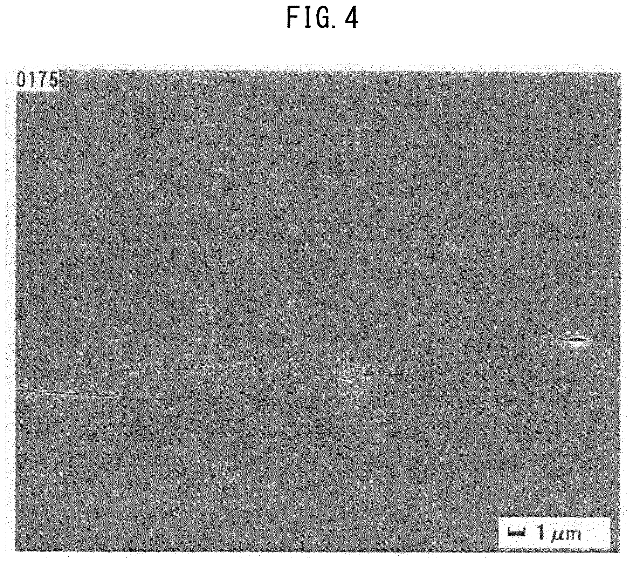

FIG. 4 is a SEM photograph of a cross-section of the film containing no fine particles in Comparative Example 3-0, using only the polymer of Example 1.

### DESCRIPTION OF EMBODIMENTS

### <High-concentration particle-containing film>

### <Nitrogen-containing aromatic polymer>

The high-concentration particle-containing film of the invention has a polymer component composed mainly of a nitrogen-containing aromatic polymer, and contains particles at 55 vol% or greater. The film form of the high-concentration particle-containing film of the invention is maintained primarily by the polymer component, the main component of which, and preferably 70 vol% or greater and especially 90 vol% or greater of which, is composed of a nitrogen-containing aromatic polymer.

The nitrogen-containing aromatic polymer to be used as a polymer component of the invention may be an aromatic polyamide (hereunder also referred to as "aramid"), aromatic polyimide, aromatic polyamideimide or the like, among which resins made of aromatic polyamides are preferred, and para-aromatic polyamides (hereunder also referred to as "para-aramids") are especially preferred, as they have excellent physical properties, heat resistance and low heat shrinkage properties.

Also according to the invention, the nitrogen-containing aromatic polymer preferably contains an oxydiphenylene component, allowing the flexibility of the film to be increased.

As a polymer component for excellent handling properties, this nitrogen-containing aromatic polymer is preferably a copolymerized aromatic polyamide. Particularly preferred is a para-copolymerized aromatic polyamide, or 3,3'-oxydiphenylenediamine, 3,4'-oxydiphenylenediamine or 4,4'-oxydiphenylenediamine wherein the copolymerizing diamine component contains an oxydiphenylene component.

Methods of increasing the degree of polymerization of polymers are well-known as methods for improving the physical properties of films. However, while poly-paraphenylene terephthalamides obtained by copolymerizing para-phenylenediamine and para-terephthaloyl dichloride, for example, are widely known as common para-aramids (for example, TWARON^{R} by Teijin, Ltd.), increasing the degree of polymerization of such poly-paraphenylene terephthalamides makes them poorly soluble in organic solvents. Even when concentrated sulfuric acid, for example, is used as the organic solvent, it becomes necessary to limit the degree of polymerization to a low value in order to maintain the condition of excellent handling properties. Furthermore, while this poly-paraphenylene terephthalamide is known to exhibit liquid crystalline properties, the molecules readily form domains with each other, and since such domain formation interferes with homogeneous redispersion in the solution, the storage stability has been inferior. Since numerous particles are added according to the invention, it is preferred to increase the solubility of the polymer component in organic solvents and to suppress the liquid crystalline properties, and it is therefore preferred to include a copolymerizing diamine component.

Polymers that are most preferred for use according to the invention are those having a component that introduces a bending component into the molecule, as the copolymerizing diamine component of the aforementioned nitrogen-containing aromatic polymer, allowing the handling properties and film formability to be further improved.

### (Para-copolymerized aromatic polyamide)

When the nitrogen-containing aromatic polymer is a para-copolymerized aromatic polyamide, for example, the para-copolymerized aromatic polyamide is preferably one composed of (1) para-phenylenediamine, (2) a copolymerizing diamine and (3) para-terephthaloyl dichloride, from the viewpoint of solubility in organic solvents and stability of the solution. Copolymerizing diamines include 3,3'-oxydiphenylenediamine, 3,4'-oxydiphenylenediamine or 4,4'-oxydiphenylenediamine. As the (2) copolymerizing diamine component it is most preferred to contain 3,4'-oxydiphenylenediamine or 4,4'-oxydiphenylenediamine, which provide high flexibility in the molecular chains.

By thus introducing a bending structure from the copolymerizing diamine component into the molecule, as a para-copolymer polyamide component, it is possible to increase the solubility in polar organic solvents and improve the handling properties, as well as the physical properties of the film. Suitable copolymerizing diamine components include 3,3'-oxydiphenylenediamine, 3,4'-oxydiphenylenediamine or 4,4'-oxydiphenylenediamine. In this case, the proportion of the copolymerizing diamine component in the amine component is preferably 25 to 75 wt%. A small amount of copolymerizing diamine component will tend to lower the solubility in polar organic solvents. If the amount of copolymerizing diamine component is too large, on the other hand, the strength will tend to be reduced, and therefore the suitable proportion for the copolymerizing diamine component in the amine component is preferably in the range of 40 to 60 wt%. The degree of polymerization is preferably such that the intrinsic viscosity (IV) is in the range of 1.5 to 2.6 or 3.3 to 5.0 as measured at 30°C, for a solution with a polymer concentration 0.5 g/dl in 98% concentrated sulfuric acid.

The para-copolymerized aromatic polyamide may be prescribed as having the number-average molecular weight (Mn) of 10,000 or greater, 20,000 or greater, 25,000 or greater or 30,000 or greater, and no greater than 150,000, no greater than 100,000, no greater than 80,000 or no greater than 75,000. For the purpose of the invention, the number-average molecular weight can be measured using gel permeation chromatography (GPC).

If the number-average molecular weight of the para-copolymerized aromatic polyamide is 10,000 or greater, the number of entanglement points between the polymer chains formed during film formation will increase, allowing the film formability and the mechanical properties of the film to be improved.

If the number-average molecular weight of the para-copolymerized aromatic polyamide is no greater than 150,000, then the heat shrinkage factor of the film obtained from the polyamide, and especially its heat shrinkage factor at 150°C, can be further reduced. In addition, when a solution containing the polyamide is applied to a readily heat-shrinkable polyethylene porous substrate or the like to form a laminate that can be used as a separator, for example, it is possible to lower the heat shrinkage factor of the laminate, and in particular the heat shrinkage factor at 150°C. The lowering effect on the heat shrinkage factor is believed to be due to relatively homogeneous dispersion of the particles present at high concentration in the film, by the use of a relatively low-molecular-weight polymer.

From the viewpoint of the heat shrinkage properties, film formability onto a substrate and film strength, the para-copolymerized aromatic polyamide may be prescribed as having a weight-average molecular weight (Mw)/number-average molecular weight (Mn) ratio (hereunder also referred to as "molecular weight distribution") of no greater than 10.0, no greater than 8.0 or no greater than 5.0, the value also being 1.0 or greater, 2.0 or greater or 3.0 or greater.

According to the invention, when the copolymerizing diamine component (component (2)) of the para-copolymerized aromatic polyamide used is 3,3'-oxydiphenylenediamine, 3,4'-oxydiphenylenediamine or 4,4'-oxydiphenylenediamine, and especially 3,4'-oxydiphenylenediamine or 4,4'-oxydiphenylenediamine that impart a high degree of flexibility to the molecular chains, the effect of flexibility is exhibited to a notable degree without brittleness of the film obtained by including the particles at high concentration. While the reason for this is not completely understood, the present researchers conjecture as follows.

In this type of para-copolymerized aromatic polyamide, presumably a plurality of constituent diamine components are linked by block copolymerization. If the para-copolymerized aromatic polyamide is fiberized, for example, and also stretched at high temperature, a phenomenon occurs in which is possible to clearly detect reflection by X-ray analysis while heat treatment of the polymer at 400 degrees results in lack of clarity of the reflection in X-ray analysis. This phenomenon is thought to occur because the poly-paraphenylene terephthalamide structures are brought adjacent to each other by interaction, forming domains, and the sections whose constituent elements are copolymerizing diamine components, i.e. 3,3'-oxydiphenylenediamine, 3,4'-oxydiphenylenediamine or 4,4'-oxydiphenylenediamine, are present as soft segments. The presence of such soft segments is believed to be a major factor allowing the polymer components in the solvent to freely disperse and form a network structure, and for the film to maintain flexibility even with addition of large amounts of particles. It is particularly suitable for the molecular chains of the polymer to have 3,4'-oxydiphenylenediamine as the copolymerizing diamine component, because it has a distinct molecular bending structure. From this viewpoint, the molecules forming the polymer are preferably not oriented, and the film is preferably a cast film that has not undergone stretching. A non-oriented film also has the advantage of low heat shrinkage.

By specifying the polymer component as primarily a nitrogen-containing aromatic polymer and also adding the aforementioned copolymerizing diamine component to the polymer component, as according to the invention, it has become possible to obtain a film that maintains flexibility without brittleness, even when particles are included at high concentration.

### (Method of adjusting molecular weight of para-copolymerized aromatic polyamide)

A para-copolymerized aromatic polyamide having at least one of the aforementioned number-average molecular weights and molecular weight distributions may be prepared by controlling the polymerization when obtaining the aromatic polyamide, or it may be prepared by lowering the molecular weight of a para-copolymerized aromatic polyamide of high molecular weight. The latter method, i.e. low molecularization processing, is preferred because in the former method, i.e. controlling the polymerization, it is necessary to significantly modify the production process for para-copolymerized aromatic polyamides of usual molecular weight, while it is also difficult to achieve fine control of the molecular weight.

The low molecularization processing is carried out, for example, by cutting the molecular chains of the para-copolymerized aromatic polyamide by immersion in an alkali or immersion in an acid. With immersion in an acid, the decomposition reaction of the aromatic polyamide takes place less readily, making it necessary to set a more strict reaction temperature and reaction time. It is therefore preferred to use a method of immersion in an alkali, which allows low molecularization to be achieved under relatively milder conditions. By using this method it is possible to effectively achieve low molecularization while not impairing the homogeneous distribution of the molecular weight.

If immersion is in an alkali, appropriate setting of the immersion conditions will allow para-copolymerized aromatic polyamides of different number-average molecular weights to be obtained from the same high-molecular-weight para-copolymerized aromatic polyamide.

When a method of lowering the molecular weight by immersion in an alkali is used, the temperature for the immersion may be 80 to 140°C, for example, the alkali concentration may be 1 to 10 wt%, if the alkali used is NaOH, for example, and the immersion time may be 30 minutes to 2 hours, for example.

If the immersion temperature is increased, the alkaline concentration is increased or the immersion time is lengthened beyond these conditions, an undesirable situation will result because decomposition of the polymer will proceed to an excessive degree due to the alkali, and the treated polymer will be more likely to undergo degradation and loss of mechanical properties, while high processing costs will also become necessary for a heating step or for a post-treatment neutralization step.

If the immersion temperature is lower, the alkaline concentration is lower or the immersion time is shorter than these conditions, on the other hand, it will not be possible to effectively achieve homogeneous low molecularization of the para-copolymerized aromatic polyamide, making it difficult to obtain a para-copolymerized aromatic polyamide having either or both the aforementioned number-average molecular weight and molecular weight distribution.

### <Particles>

The particles are not particularly restricted so long as they retain their particle shapes and do not dissolve when mixed with the polymer. They are also preferably inorganic particles, or organic particles of a poorly soluble crystalline polymer. Inorganic particles are preferred from the viewpoint of obtaining satisfactory heat resistance. Such particles may be used alone or in combinations of more than one.

The high-concentration particle-containing film of the invention contains the particles at 55 vol% or greater. The particle content is more preferably 65 vol% or greater, and especially 75 vol% or greater. The upper limit is preferably in the range of no greater than 99 vol%, no greater than 98 vol% or no greater than 95 vol%. Including particles in the film within this range will allow the film to be made porous. Since the film is porous, when it is used as a separator, for example, it will be possible to increase the heat resistance and low heat-shrinkage properties of the separator without impairing the necessary movement of ions. As used herein, the volume content ratio (vol%) is the proportion obtained from the weight of the polymer and the weight of the particles in the film, converted to volume based on the respective material densities. It is therefore the abundance ratio of the solid volume after subtracting voids in the film.

In terms of the weight ratio, the particle content is preferably in the range of 66 wt% or greater, more preferably 75 to 99 wt% and most preferably 80 to 95 wt%, although this will depend on the specific gravity of the particles.

If the particle content is too low, the spaces between particles will increase and the proportion of polymer will be higher, resulting in lower heat resistance. A particular concern is increase in the shrinkage factor, when the purpose of use is as a ceramic board obtained by sintering, or lower thermal conductivity due to a lower amount of added thermal conductive filler, when the purpose of use is as a heat sink. If the particle content is too high, on the other hand, it will be difficult to form a film surface state and the physical properties of the film can potentially be reduced.

According to the invention, the proportion of particles may be further increased to drastically lower the proportion of polymer component, or stretching may be carried out at low temperature after film formation, and thus it is possible to generate microvoids in the film. A film with a considerable number of voids results when the polymer content has been limited to below the total volume of voids in the state of closest packing of particles, in terms of the volume ratio.

For example, when the filling particles have spherical shapes and equal diameters, the particle filling ratio is only 0.74 with a hexagonal closest-packing or face-centered cubic lattice structure (the ratio being 0.68 for a body-centered cubic lattice structure, 0.52 for a simple cubic lattice structure and 0.38 for a diamond structure). When the particle content is 75 vol% or greater, therefore, as when particles are added in an amount exceeding the closest packing rate, the polymer (resin) is unable to fill all of the spaces between the particles, and a film with a porous structure is formed that has numerous fine voids.

Such a porous structure having voids in the film is especially desirable for an electrode spacing barrier (separator) for a secondary battery that stores electric power due to movement of metal ions, such as a lithium ion battery. The voids referred to here are primarily those formed by gaps between the particles and the polymer.

The particles to be used for the invention are preferably inorganic particles, or organic particles of a poorly soluble crystalline polymer. Inorganic particles are preferably metallic particles, an oxide compound, semiconductor element, a semiconductor compound or the like, and a poorly soluble polymer may be a crystalline polymer that is insoluble in solvents, or any of various fillers such as cellulose nanofibers.

The particles to be used for the invention may be particles 1 mm or smaller in size, with microparticles being preferred. The mean particle diameter of the microparticles is preferably no greater than 10 µm and more preferably no greater than 5 µm. The more preferred range is 0.01 µm to 2 µm.

The shapes of the particles may be polygonal shapes, as the same shapes after pulverization, or they may be spherical, rugby ball-shaped, narrowed gourd shapes, needle shapes with high aspect ratios, or tabular shapes. When the shapes of the microparticles are not spherical, the particle sizes are the lengths of the particles in the directions of their maximum lengths. Two or more different types of particles may also be simultaneously included. Using particles with different particle sizes can yield a polymer film with a higher filling ratio of particles.

More specifically, the particles to be used for the invention may be of a semiconductor material such as silicon, silicon carbide (SiC) or germanium, a nitride compound such as silicon nitride, aluminum nitride or boron nitride, or a carbon material such as carbon black, diamond, graphene, fullerene, carbon nanotubes, carbon nanofibers or graphite. It is also preferred to use mineral microparticles such as kaolin, talc, clay, hydrotalcite or diatomaceous earth.

Other materials in addition to those mentioned above as inorganic particles include calcium carbonate, magnesium carbonate, barium carbonate, calcium sulfate, magnesium sulfate, barium sulfate, aluminum hydroxide, magnesium hydroxide, calcium oxide, magnesium oxide, titanium oxide, alumina, mica, zeolite and glass or the like. The inorganic particles are most preferably silica, kaolin or carbon black, from the viewpoint of heat resistance and chemical stability. These inorganic particles may be used alone, or two or more different types of inorganic particles may be used in admixture.

Such particles tend to form secondary and tertiary higher-order structure structures in the polymer, especially in the case of carbon black, and reduction in the physical properties of the film usually tends to be significant when the abundance of the particles has been increased. However, the high-concentration particle-containing film of the invention retains the physical properties of the film with a small amount of polymer component even when such structures are formed, without brittleness and also without causing cracking when bent.

### <Thickness of high-concentration particle-containing film>

The high-concentration particle-containing film of the invention preferably has a thickness of no greater than 300 µm. It is also preferably in the range of 1 to 200 µm, although this will depend on the purpose of use. For example, when it is to be used as a separator heat-resistant coating for LiB, LiC or the like, the thickness is preferably in the range of 1 to 20 µm and more preferably in the range of 1 to 4 µm. Since the high-concentration particle-containing film of the invention has excellent physical properties, it has become possible to reduce the thickness and to reduce internal resistance, as compared to the prior art. In addition, since the heat resistance is high, it has also become possible to sufficiently adapt to shrinkage stress of PE porous films, for example, caused by thermal runaway when the separator has become damaged.

For usage as a heat conducting film, the thickness is preferably in the range of 10 to 50 µm, and when used for a heat-resistant or flame-resistant layer, a film with a thickness of 100 µm or greater may be preferred. As extreme cases, when it is to be used as a barrier, the film may be preferred to have a thickness of up to about 1 mm, or if it is to be used for heat conduction (heat sink), a film with a thickness of about 2 to 8 mm or an overall fin-shape having smooth protrusions (convex shapes) may be preferred.

### <Properties of high-concentration particle-containing film>

### (Heat shrinkage factor)

The heat shrinkage factor of the high-concentration particle-containing film of the invention, or the laminate comprising the film, may be determined by cutting an obtained sample at constant dimensions, placing it in a dryer set to a prescribed temperature, and measuring the dimensional change before and after heat drying. The heat shrinkage factor of the high-concentration particle-containing film of the invention may be prescribed to be no greater than 10%, no greater than 5%, or no greater than 2%, for a film with a thickness of 20 µm before heat treatment at 150°C, for example. The heat shrinkage factor of a laminate comprising a film with a thickness of 4 µm and a polyethylene porous substrate with a thickness of 10 µm (F10CF1 by Toray Co., Ltd.), before heat treatment at 150°C, for example, may be prescribed to be no greater than 50%, no greater than 40%, no greater than 30%, no greater than 25% or no greater than 20%. The heat shrinkage factor referred to here is intended to be the value in either or both the parallel direction (MD) and the perpendicular direction (TD) to the substrate delivery direction.

### (ΔGurley value, and ΔGurley value per unit thickness)

Gurley measurement was carried out according to JIS P8117 (Gurley air permeability measurement method). The sample used for measurement may be, for example, a sample of a laminate comprising a porous substrate onto which the high-concentration particle-containing film has been applied. In this case, the measured value for the sample minus the Gurley value of the porous substrate may be defined as the ΔGurley value. The value of this ΔGurley value divided by the film thickness may be used as the ΔGurley value per unit thickness. The ΔGurley value of the high-concentration particle-containing film of the invention may be prescribed to be no greater than 65 seconds/100 cc, no greater than 60 seconds/100 cc or no greater than 55 seconds/100 cc. The ΔGurley value per unit thickness of the high-concentration particle-containing film of the invention may be prescribed to be no greater than 30 seconds/100 cc/µm, no greater than 25 seconds/100 cc/µm or no greater than 20 seconds/100 cc/µm.

### <Method for producing high-concentration particle-containing film>

The high-concentration particle-containing film of the invention can be obtained by the method for producing a high-concentration particle-containing film, as another aspect of the present invention. Specifically, it is a production method in which the treatment solution is a solution containing particles and a polymer dissolved in an organic solvent, the polymer in the treatment solution is primarily a nitrogen-containing aromatic polymer, the proportion of particles constituting the solid portion content of the treatment solution is 66 wt% or greater, and the treatment solution is applied onto a substrate to form a film. The particle content in the treatment solution must be 66 wt% or greater of the total amount of the polymer and particles after drying, but it is preferably in the range of 75 to 99 wt% and especially 80 to 95 wt%.

The high-concentration particle-containing film obtained by this method preferably contains the particles at 55 vol% or greater in the dried film. The particle content is more preferably 65 vol% or greater, and especially 75 vol% or greater. The upper limit is preferably in the range of no greater than 99 vol%, no greater than 98 vol% or no greater than 95 vol%. Here, the volume content ratio (vol%) is the same as defined above, being the volume of particles with respect to the total of the polymer volume and particle volume in the film. That is, it is the abundance ratio of the solid volume after subtracting voids in the film.

In the production method of the invention, the substrate used for film formation may be a smooth glass plate or synthetic resin film, and in the case of a synthetic resin film, it is preferably a polyester film with an inactive surface. For application and formation of a film, it is preferred to adhere the polymer-containing treatment solution onto the substrate by applying with a coating bar at a set clearance, or by using a casting method in which a treatment solution that exhibits a flow property is cast, and drying at a low temperature of no higher than 100°C to form a film.

More specifically, the production method of the invention is preferably a method in which a nitrogen-containing aromatic polymer is used as the main component of the polymer component, and the polymer component dissolved in an organic solvent and particles are subsequently added, after which the solution is degassed and a film is formed from it. During this time, the particles preferably maintain their particle shapes without dissolving in the organic solvent used to dissolve the polymer component. In regard to the polymer component, preferably the main component of the polymer is a nitrogen-containing aromatic polymer, and especially an aromatic polyamide, as a preferred polymer to be used in the aforementioned high-concentration particle-containing film of the invention. The nitrogen-containing aromatic polymer is more preferably a para-copolymerized aromatic polyamide, and even more preferably it contains an oxydiphenylene component such as 3,3'-oxydiphenylenediamine, 3,4'-oxydiphenylenediamine or 4,4'-oxydiphenylenediamine, as a copolymerizing diamine component.

A para-aromatic polyamide such as poly-paraphenylene terephthalamide that does not include a copolymerizing diamine component has high crystallinity and gels within a period of about a day, and consequently the storage stability of the solution is poor. On the other hand, a solution containing a para-copolymerized aromatic polyamide that includes the aforementioned copolymerizing diamine component has a bending component in the molecule, giving it high solubility and resistance to gelling in organic solvents, and the solution is therefore excellent in terms of handleability, including storage stability.

Examples for the organic solvent to dissolve the polymer include organic polar amide-based solvents such as N,N-dimethylformamide, N,N-dimethylacetamide, N-methyl-2-pyrrolidone and N-methylcaprolactam, water-soluble ether compounds such as tetrahydrofuran and dioxane, water-soluble alcohol-based compounds such as methanol, ethanol and ethylene glycol, water-soluble ketone-based compounds such as acetone and methyl ethyl ketone, and water-soluble nitrile compounds such as acetonitrile and propionitrile. These solvents may be used alone, or mixed solvents of two or more of them may be used. The solvent used is preferably dehydrated. From the viewpoint of general purpose use, handleability and solubility, it is preferably N-methyl-2-pyrrolidone (hereunder also indicated as "NMP"). In order to include large amounts of particles, the polymer concentration in the organic solvent containing the polymer component is preferably that of a dilute solution, the solid concentration of the polymer being preferably no greater than 10 wt%, and especially in the range of 0.1 to 4 wt%.

After forming the film, it is preferably immersed in water for extraction removal of the organic solvent and the salt components used for solidification.

Moreover, after formation into the form of a film, it is preferably also stretched, or subjected to fixed-length processing, under low-temperature conditions, such as 100°C or below and more preferably 80°C or below, to generate voids between the particles and polymer.

In the production method of the invention, the high-concentration particle-containing film obtained by film formation on a substrate such as a glass plate may be detached from the substrate to prepare a self-supporting film, while the treatment solution may be applied onto the substrate to prepare a laminate in which the high-concentration particle-containing film and the substrate are integrated. In the case of a layered construction, the film may be denoted as a layer or thin-film.

For example, a high-concentration particle-containing thin-film of the invention may be obtained by coating a substrate with a coating solution that includes particles, and a para-copolymerized aromatic polyamide having either or both the aforementioned number-average molecular weight and molecular weight distribution, dissolved in an organic solvent, and then drying the coating.

In this case, the polymer concentration in the coating solution may be 1.5 wt% or greater, 2.0 wt% or greater or 2.5 wt% or greater, and no greater than 7 wt%, no greater than 6 wt%, no greater than 5 wt%, or 4 wt%.

In consideration of the environmental load with increased solvent use and of increasing production cost, the polymer concentration is preferably a high concentration, and especially 2.5 wt% or greater or 3.0 wt% or greater. With a para-aromatic polyamide such as poly-paraphenylene terephthalamide (PPTA), increasing concentration of the polymer concentration in the coating solution tends to result in crystallization and gelation, but a para-copolymerized aromatic polyamide is superior in that it does not exhibit such a tendency, at least within the concentration range specified above.

From the viewpoint of the coating property onto a substrate, the viscosity of the coating solution at ordinary temperature may be prescribed to be 400 mPa·S or higher, 450 mPa·S or higher or 500 mPa·S or higher, and prescribed to be no higher than 5000 mPa·S, no higher than 4000 mPa·S or no higher than 3000 mPa·S. For the purpose of the present disclosure, ordinary temperature is intended to be the temperature range of 15 to 25°C.

Examples of substrates that may be used in the laminate include nonwoven fabrics and porous substrates, and especially porous films, the materials of which may be polyolefin resins such as polyethylene or polyester resins such as polyethylene terephthalate (PET) and polyethylene naphthalate (PEN).

### EXAMPLES

The present invention will now be further explained in detail through the following examples, with the understanding that these examples are not limitative on the invention.

### <Example 1>

For Example 1, the porosity, mechanical strength and flexibility of a high-concentration particle-containing film were evaluated.

### (Preparation of polymer solution)

A para-copolymerized aromatic polyamide was used as the nitrogen-containing aromatic polymer. Specifically, TECHNORA^{R} powder by Teijin, Ltd. was prepared, being composed of (1) para-phenylenediamine, (2) a copolymerizing diamine and (3) para-terephthaloyl dichloride, wherein the copolymerizing diamine component was 3,4'-oxydiphenylenediamine, and the proportion of the copolymerizing diamine component in the amine component was 50 wt%. The density when formed into a film was 1.39 g/cm3. The intrinsic viscosity (IV) was 3.4 as measured at 30°C, with a solution having a polymer concentration 0.5 g/dl in 98% concentrated sulfuric acid.

After mixing 30 g of the TECHNORA^{R} powder with 950 g of N-methyl-2-pyrrolidone (NMP) and 20 g of calcium chloride at room temperature, the mixture was allowed to stand for a day and a night to obtain an aramid solution with a concentration of 3 wt%.

### (Preparation of slurry)

After sampling 100 g of the 3 wt% aramid solution, 12 g of microspherical silica (QUARTRON^{R} SP-03F by Fuso Chemical Co., Ltd., mean particle size: 0.3 µm, true specific gravity: 2.2) was added, and the mixture was dispersed and degassed using a "RENTARO" by Thinky Corp., to prepare a slurry. The abundance ratio of the aramid resin:silica particles in the slurry was 20:80, as the weight ratio.

### (Fabrication of film)

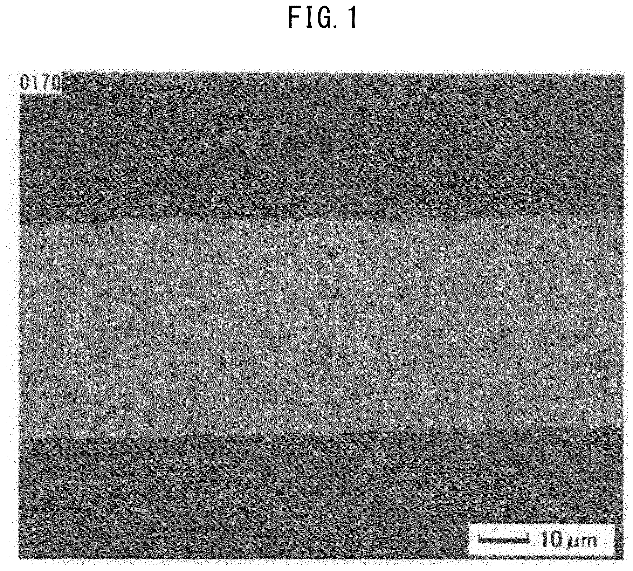

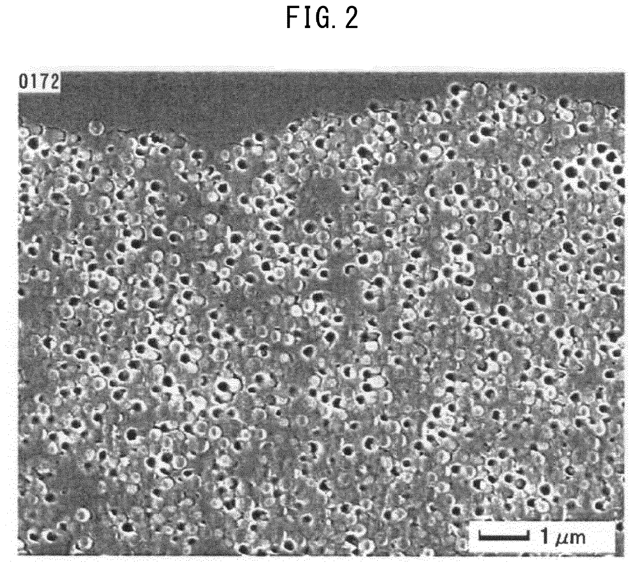

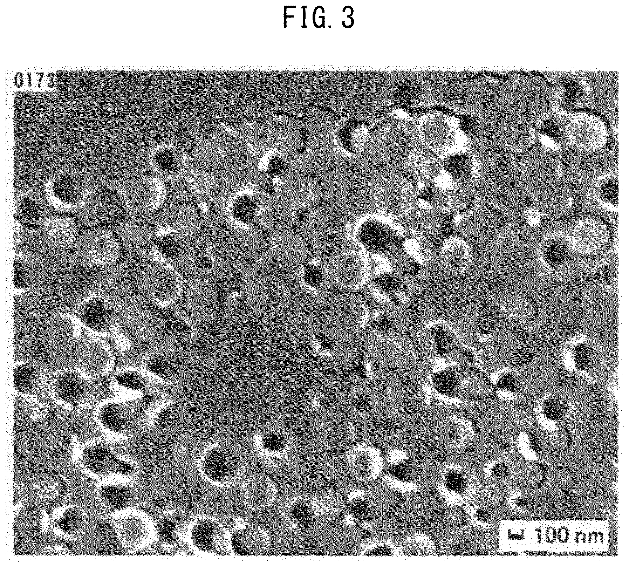

The obtained slurry was coated onto a glass plate, as a smooth substrate, using a stainless steel coating bar, and was subsequently dried at 70°C for 4 hours to obtain a film. The obtained film was then immersed in an ion-exchanged water for a day and a night, the NMP and calcium chloride were extracted, and the film was rinsed, to obtain an aramid solid film containing 74 vol% particles. The obtained film was also anchored on a fixed frame so as to prevent shrinkage in the subsequent drying step, and was dried at 70°C for 24 hours and then vacuum dried at 100°C for 24 hours, to obtain a high-concentration particle-containing film. Numerous microvoids had formed between the polymer and particles composing the film. Electron micrographs are shown in Fig. 1 to Fig. 3.

When the obtained film with a thickness of 40 µm was wrapped around a stainless steel bar with a diameter of 2 mm and a 180° bending test was repeated 10 times, the film was shown to have sufficient mechanical strength and flexibility without damage or cracking of the film.

### <Comparative Examples 2-1 to 2-5, Examples 2-6 and 2-7>

In Comparative Examples 2-1 to 2-5, Examples 2-6 and 2-7, the added particles were changed from microspherical silica to carbon black, and the mechanical strength, flexibility and electrical resistance of the high-concentration particle-containing films were evaluated.

Slurry was obtained in the same manner as Example 1, except for using carbon black (DENKA BLACK^{R} by Denka Co. Ltd., acetylene black, mean particle diameter: 35 nm) instead of the microspherical silica of Example 1, with addition at a content of 20 to 95 wt%. When the carbon black addition was high resulting in thickening, additional NMP was added for viscosity adjustment, in order to improve the miscibility and film formability. The procedure was otherwise conducted in the same manner as Example 1 to obtain a high-concentration particle-containing film. The volume contents of the particles in the films are listed in Table 1. The volume content percentage (vol%) is the volume percentage of particles with respect to the total of the polymer volume and particle volume in the film.

When each obtained film with a thickness of 40 µm was wrapped around a stainless steel bar with a diameter of 2 mm and a 180° bending test was repeated 10 times, even the film with the highest content of 95 wt% was shown to have sufficient mechanical strength and flexibility without damage or cracking of the film, though being slightly hard. The same applies to the other films.

The electrical resistance decreased in order as the addition of carbon black increased, but the electrical resistances of the films of Examples 2-6 and 2-7 which had high particle contents were virtually unchanged compared to Comparative Examples 2-1 to 2-5. This suggests that contact had taken place between virtually all of the added carbon black particles.

**[Table 1]**

| | | Comp. Example 2-1 | Comp. Example 2-2 | Comp. Example 2-3 | Comp. Example 2-4 | Comp. Example 2-5 | Example 2-6 | Example 2-7 |
|---|---|---|---|---|---|---|---|---|
| Particle addition amount | wt% | 10 | 20 | 30 | 40 | 60 | 80 | 95 |
| Content ratio | vol% | 7.5 | 15.4 | 24.0 | 32.6 | 52.1 | 74.4 | 93.2 |
| Electrical resistance | Ωcm | 10,000 | 1,200 | 600 | 200 | 100 | 40 | 36 |

### <Comparative Examples 3-0 to 3-2, Example 3-3>

In Comparative Examples 3-0 to 3-2 and Example 3-3, the LOI (limiting oxygen index), mechanical strength and flexibility of high-concentration particle-containing films were evaluated, for films containing no particles and films wherein the added particles were changed from microspherical silica to kaolin particles.

Slurry was obtained in the same manner as Example 1, except for using kaolin particles (product of Imerys Minerals Japan K.K., Al4Si₄O₁₀(OH)₈, triclinic crystals, particle ratio of particles with specific gravity: 2.6, particle size: ≤2 µm = 84 wt%) instead of the microspherical silica of Example 1, and with addition to contents of 0 to 80 wt%. The procedure was otherwise conducted in the same manner as Example 1 to obtain a particle-containing film. The volume contents of the particles in the films are listed in Table 2. The volume content percentage (vol%) is the same as defined above, being the volume percentage of particles with respect to the total of the polymer volume and particle volume in the film. The same applies to the other films.

The LOI (limiting oxygen index) of the obtained films increased as the kaolin content increased.

When each obtained film with a thickness of 40 µm was wrapped around a stainless steel bar with a diameter of 2 mm and a 180° bending test was repeated 10 times, even the film with the highest content of 80 wt% was shown to have sufficient mechanical strength and flexibility without damage or cracking of the film, though being slightly hard.

**[Table 2]**

| | | Comp. Example 3-0 | Comp. Example 3-1 | Comp. Example 3-2 | Example 3-3 |
|---|---|---|---|---|---|
| Particle addition amount | wt% | 0 | 40 | 60 | 80 |
| Content ratio | vol% | 0 | 26.1 | 44.3 | 68.0 |
| LOI | % | 26 | 35 | 42 | 67 |

### <Example 4-1>

In Example 4-1, the porosity of a high-concentration particle-containing film was evaluated, with the added particles changed from microspherical silica to SiO₂ particles.

A particle-containing film with a thickness of 200 µm was obtained by the same method as Example 1, using SiO₂ particles (pulverized product, mean particle size: 5 µm) instead of the microspherical silica of Example 1, and with addition to a particle weight ratio of 90%.

Numerous voids formed between the constituent resin and the SiO₂ of the inorganic particles. The volume content of the inorganic particles in the film was 85 vol%. The volume content percentage (vol%) is the volume percentage of particles with respect to the total of the polymer volume and particle volume in the film, being the abundance ratio of particles in the solid portion without the voids. This film, which had a high void percentage, could be suitably used as an interelectrode barrier (separator) for a secondary battery.

### <Comparative Examples 5-1 to 5-3>

For Comparative Examples 5-1 to 5-3, the shape retention of each film was evaluated, with the resin changed to nylon 6 polymer and with microspherical silica, carbon black or kaolin particles used as the particles.

It was attempted to fabricate a film using nylon 6 polymer instead of the nitrogen-containing aromatic polymer of Example 1 and using a solution with a particle content of 50 vol%, but it was not possible to maintain the film shape at the stage of drying on the glass plate. The microspherical silica of Example 1, the carbon black of Example 2 and the kaolin particles of Example 3 were each used as the inorganic particles.

### <Examples 6-1 to 6-3, Comparative Examples 6-4 to 6-5>

For Examples 6-1 to 6-3 and Comparative Examples 6-4 and 6-5, evaluation was carried out regarding the relationship between the coating solution viscosity and the polymer concentration, based on the molecular weight of the polymer in the coating solution, and the air permeability and heat shrinkage factor of the laminate comprising the high-concentration particle-containing film and polyethylene porous substrate, and of the polyethylene porous substrate.

### (Example 6-1)

### (Alkali treatment and molecular weight measurement of polymer)

A para-copolymerized aromatic polyamide was used as the nitrogen-containing aromatic polymer. The para-copolymerized aromatic polyamide was prepared by copolymerizing (1) para-phenylenediamine, (2) a copolymerizing diamine and (3) para-terephthaloyl dichloride. The copolymerizing diamine used here was 3,4'-oxydiphenylenediamine, the proportion of the copolymerizing diamine component being 50 wt% of the entire diamine component. The polymer was added to a 5 wt% sodium hydroxide aqueous solution, and alkaline immersion was carried out at 130°C for 1 hour using an infrared heating minicolor dyeing machine (product of Texam Co., Ltd.). The treated polymer was neutralized by rinsing, and the number-average molecular weight of the polymer was measured by gel permeation chromatography (GPC) under the following measuring conditions. The results are shown in Table 3.

Apparatus: LC-20A Series high performance liquid chromatograph
Column oven: CTO-20A
Mobile phase: NMP
Autosampler: SIL-20AHT
LC workstation: LC solution
Flow rate: 0.3 ml/min
Differential refractometer detector: RID-10A
Oven temperature: 60°C
Molecular weight reference sample: polystyrene

### (Preparation and viscosity measurement of polymer solution)

The alkali-treated and rinsed polymer was added to N-methyl-2-pyrrolidone (NMP) to a polymer concentration of 3 wt%, and stirred at 80°C. After confirming that the polymer had swelled with NMP, lithium chloride was added to 0.8 wt% of the entire solution, to prepare a solution of the polymer dissolved in NMP (hereunder referred to as "dope"). The prepared dope was allowed to stand for 1 day in a temperature and humidity controlled chamber (25°C, 50% humidity), and then the dope viscosity was measured with a viscometer (product of Toki Sangyo Co., Ltd.). The results are shown in Table 3.

### (Film fabrication and physical property measurement)

The prepared dope was coated onto a glass plate, as a smooth substrate, using a stainless steel coating bar, after which it was dried at 100°C for 15 minutes for sufficient volatilization of the NMP, and the coated film was immersed in an ordinary temperature water bath for 30 minutes for solidification. The water was then wiped off, and drying was repeated at 80°C for 10 minutes to obtain a polymer film. The obtained polymer film was cut into a 10 mm width × 50 mm long strip and a tensile test was conducted using a TENSILON universal testing machine (RTF-1210). The pull rate was 20 mm/min. The thickness and basis weight of the film were measured using a thickness gauge and a 5 cm-square sample. The results are shown in Table 3.

### (Preparation of coating solution on polyethylene porous substrate)

The polymer obtained as described above, and magnesium hydroxide as filler particles were added to NMP in prescribed amounts to prepare a coating solution. The mixing proportions of the polymer and filler particles in the coating solution were 20 wt% polymer and 80 wt% filler particles. The polymer concentration (wt%) in the coating solution was a concentration yielding a coatable viscosity of 1,000 mPa·S.

### (Coating of polyethylene porous substrate)

A polyethylene porous substrate (F10CF1 by Toray Co., Ltd., hereunder also referred to as "PE porous film") was coated by adding the aforementioned coating solution at a timing just before passing through gripping rollers. It was then immersed in a water bath for 3 minutes to solidify the coating layer, after which it was dried in a 60°C dryer for 10 minutes to obtain a laminate for Example 6-1, having the substrate surface coated with a particle-containing polymer layer.

### <Example 6-2>

A polymer film and laminate for Example 6-2 were fabricated in the same manner as Example 6-1, except that the alkaline immersion time was changed to 2 hours, further promoting polymer decomposition by the alkali. The physical properties of the film and laminate were measured in the same manner as Example 6-1, and the results are shown in Table 3.

### <Example 6-3>

A polymer film and laminate for Example 6-3 were fabricated in the same manner as Example 6-1, except that the alkaline concentration was changed to 1 wt%, as a condition for milder progression of polymer decomposition by the alkali. The physical properties of the film and laminate were measured in the same manner as Example 6-1, and the results are shown in Table 3.

### <Comparative Example 6-4>

A polymer film and laminate for Comparative Example 6-4 were fabricated in the same manner as Example 6-1, except for using a polymer before alkali treatment. The physical properties of the film and laminate were measured in the same manner as Example 6-1, and the results are shown in Table 3.

### <Comparative Example 6-5>

A polyethylene porous substrate was used as the sample for Comparative Example 6-5.

### <Polymer evaluation results>

As shown in Table 3, it was confirmed that alkaline immersion results in reduction in the molecular weight of the polymer and effective lowering of the dope viscosity. It was also confirmed that the degraded polymer molecular weight can be appropriately controlled by the alkali treatment time or alkaline concentration.

In regard to the tension property of the films fabricated using polymers after alkali treatment, 70% or greater of tensile strength retention was maintained even when the number-average molecular weight was lowered to about 8% (Example 6-2) of the original (Comparative Example 6-4).

The breaking elongation tended to fall with lower molecularization, but the toughness was still sufficient to avoid any particular problems in terms of handleability. This is believed to be an effect of using a para-copolymerized aromatic polyamide. Specifically, since a highly stretchable film is obtained due to the function of the copolymerizing diamine component as a soft segment, the original high extensibility allows sufficient toughness to be ensured even with some lowering of the breaking elongation as a result of low molecularization.

Since the para-copolymerized aromatic polyamide at least has excellent ductility compared to a para-aromatic polyamide such as poly-paraphenylene terephthalamide (PPTA) which does not include a copolymerizing diamine component, using this para-copolymerized aromatic polyamide in a separator that is subjected to expansion and contraction would be expected to result in fewer problems such as cracking, than with PPTA.

### <Evaluation of laminate>

### (Heat shrinkage factor measurement)

Each laminate was cut out to fixed dimensions and placed in a dryer set to a prescribed temperature, and the heat shrinkage factor was measured based on the dimensional change before and after heat drying. Measurement of the heat shrinkage factor was carried out in two directions, the parallel direction (MD) and the perpendicular direction (TD) with respect to the delivery direction of the substrate. The results are shown in Table 3.

### (Gurley measurement)

Gurley measurement was carried out for each laminate according to JIS P8117 (Gurley air permeability measurement method). The ΔGurley value was calculated as the value measured for each laminate of Examples 6-1 to 6-3 and Comparative Example 6-4, minus the Gurley value of the polyethylene porous substrate of Comparative Example 6-5. This ΔGurley value divided by the coating thickness was used as the ΔGurley value per unit thickness. The results are shown in Table 3. These parameters may be collectively referred to below simply as "Gurley value parameters".

### <Evaluation results for laminate>

As shown in Table 3, it was confirmed that low molecularization of the polymer allows the polymer concentration to be set higher under the same dope viscosity conditions (1,000 mPa·S).

It was confirmed that the Gurley value parameters for the laminate were lower with lower molecular weight of the para-copolymerized aromatic polyamide.

In addition, it was confirmed that the heat shrinkage factor of the polyethylene porous substrate was reduced by coating the particle-containing para-copolymerized aromatic polyamide layer, the extent being greater with lower molecular weight of the para-copolymerized aromatic polyamide.

The reason for the lower Gurley value parameters and heat shrinkage factor is presumably that the particles present at high concentration in the particle-containing para-copolymerized aromatic polyamide layer disperse in a relatively homogeneous manner, since a polymer with a relatively low molecular weight is used.

**[Table 3]**

| | | | Example 6-1 | Example 6-2 | Example 6-3 | Comp. Example 6-4 | Comp. Example 6-4 |
|---|---|---|---|---|---|---|---|
| Resin | Alkali treatment concentration (wt%) | | 5 | 5 | 1 | - | - |
| | Alkali treatment temperature (°C) | | 130 | 130 | 130 | - | - |
| | Alkali treatment time (hr) | | 1 | 2 | 1 | - | - |
| | 3 wt% dope viscosity (mPa·s) | | 740 | 440 | 4,760 | 20,900 | - |
| | Number-average molecular weight (Mn) | | 56,000 | 25,600 | 178,000 | 318,000 | - |
| | Molecular weight distribution (Mw/Mn) | | 2.8 | 1.1 | 2.0 | 1.8 | - |
| | Film thickness (µm) | | 6.3 | 11.2 | 6.6 | 7.4 | - |
| | Film basis weight (g/m2) | | 11.4 | 13.0 | 10.7 | 9.4 | - |
| | Tensile strength (MPa) | | 133.4 | 93.2 | 167.7 | 127.4 | - |
| | Breaking elongation (%) | | 35.7 | 13.0 | 61.8 | 70.7 | - |
| | Elastic modulus (GPa) | | 5.28 | 3.70 | 5.15 | 4.05 | - |
| Coated substrate | | | PE porous film | - | PE porous film | PE porous film | PE porous film |
| Filler type | | | Mg(OH)₂ | - | Mg(OH)₂ | Mg(OH)₂ | - |
| Coating conditions | Polymer concentration in coating solution (wt%) | | 3.4 | - | 2.1 | 1.8 | - |
| | Coating solution viscosity (mPa s) | | 1,000 | - | 1,000 | 1,000 | - |
| | Polymer/filler in film (wt%) | | 20/80 | - | 20/80 | 20/80 | - |
| | Coating thickness (µm) | | 3.7 | - | 2.1 | 2.4 | 0 |
| | Total thickness (µm) | | 13.9 | - | 13.3 | 13.7 | 10.2 |
| | Basis weight (g/m²) | | 8.2 | - | 7.7 | 8.0 | 5.6 |
| Evaluation results | Gurley value (sec/100cc) | | 154 | - | 192 | 223 | 123 |
| | ΔGurley value (sec/100cc) | | 31.2 | - | 69.2 | 100.6 | - |
| | ΔGurley value per unit thickness (sec/100cc/µm) | | 8.4 | - | 33.0 | 41.9 | - |
| | Heat shrinkage factor (120°C) | MD | 4.1 | - | 4.5 | 4.2 | 5.3 |
| | | TD | 4.5 | - | 5.5 | 4.5 | 12.3 |
| | Heat shrinkage factor (135°C) | MD | 10.2 | - | 13.2 | 13 | 26.9 |
| | | TD | 12 | - | 16.8 | 17.7 | 36.3 |
| | Heat shrinkage factor (150°C) | MD | 18.1 | - | 55.9 | 51.8 | unmeasurable |
| | | TD | 23.8 | - | 58.6 | 53.3 | unmeasurable |

### INDUSTRIAL APPLICABILITY

Since a high-concentration particle-containing film of the invention obtained as described above is a polymer that contains particles at high concentration and also has excellent heat resistance, it can be suitably used for a variety of applications, either alone as a film, or for construction of a laminate comprising the film. For example, it can be suitably utilized as a barrier between conductive members in electrical or electronic components. In addition, selection of the particles and polymer allows high flame retardance to be imparted as well.

Because the high-concentration particle-containing film of the invention contains particles at high concentration, it can minimize heat release or ignition when short circuiting occurs, and can also be suitably used in a secondary battery with high electric capacitance, for example. Moreover, the large amount of particles can ensure performance including conductivity, high shielding between electrodes and low internal resistance, allowing effective use as a separator, i.e. an interelectrode barrier material, and especially as a separator for a secondary battery. Such a separator is particularly useful as a member for a high-performance battery, condenser or electrical double layer capacitor that has a small size, light weight and high capacity and can withstand prolonged storage.

Furthermore, since the high-concentration particle-containing film of the invention has a low polymer component content and is also flexible, it can also be satisfactorily used for applications in which the polymer component is fired. For example, it can be effectively used as a ceramic board in an electronic device. Since the high-concentration particle-containing film of the invention internally contains a large amount of particles, there is no need for a complex configuration for coating and the like, while it is also able to effectively withstand warping. The particles used may be metallic particles which have excellent thermal conductivity, and the film may therefore be suitably used as a heat sink or the like as well. The particles used may be various types of powders with spherical, scaly or needle-like shapes, allowing formation of structures suited for a variety of different applications. The invention is also suitable as a binder or the like for molding of electrode materials for secondary batteries.

Some aspects of the present invention are listed below as <Aspect 1> to <Aspect 5>.
<Aspect 1>
   A high-concentration particle-containing film having a polymer component composed mainly of a nitrogen-containing aromatic polymer, and containing particles at 55 vol% or greater.
<Aspect 2>
   The high-concentration particle-containing film according to aspect 1, wherein the nitrogen-containing aromatic polymer contains an oxydiphenylene component.
<Aspect 3>
   The high-concentration particle-containing film according to aspect 1 or 2, wherein the nitrogen-containing aromatic polymer is a copolymerized aromatic polyamide.
<Aspect 4>
   The high-concentration particle-containing film according to any one of aspects 1 to 3, wherein the particles are inorganic particles.
<Aspect 5>
   A method for producing a high-concentration particle-containing film in which the treatment solution is a solution comprising a polymer and particles dissolved in an organic solvent, the polymer in the treatment solution is primarily a nitrogen-containing aromatic polymer, the proportion of particles constituting the solid portion content of the treatment solution is 66 wt% or greater, and the treatment solution is set on a substrate to form a film.

## Claims

1. A high-concentration particle-containing film comprising:
a para-copolymerized aromatic polyamide obtained by copolymerization of para-phenylenediamine, a copolymerizing diamine and para-terephthaloyl dichloride, and
particles,
wherein the weight proportion of the copolymerizing diamine is in the range of 25 to 75 wt% of the entire diamine component and the particles are present at 55 vol% or greater, and
the copolymerizing diamine is 3,3'-oxydiphenylenediamine, 3,4'-oxydiphenylenediamine or 4,4'-oxydiphenylenediamine.

2. The film according to claim 1, wherein the particle content is 55 vol% to 98 vol%.

3. The film according to claim 1 or 2, wherein the number-average molecular weight of the para-copolymerized aromatic polyamide is 10,000 to 150,000.

4. The film according to claim 3, wherein the number-average molecular weight of the para-copolymerized aromatic polyamide is 20,000 to 80,000.

5. The film according to any one of claims 1 to 4, wherein the intrinsic viscosity of the para-copolymerized aromatic polyamide is 1.5 to 2.6, as the intrinsic viscosity measured at 30°C for a solution in 98% concentrated sulfuric acid with a polymer concentration of 0.5 g/dl.

6. The film according to any one of claims 1 to 5, wherein the particles are inorganic particles.

7. A laminate that includes a film according to any one of claims 1 to 6, and a substrate.

8. The laminate according to claim 7, wherein the substrate is a nonwoven fabric or a porous film.

9. A separator for a lithium ion secondary battery, which includes a film according to any one of claims 1 to 6.

10. A method for producing a film according to any one of claims 1 to 6, wherein a treatment solution containing a para-copolymerized aromatic polyamide, particles and an organic solvent, in which the proportion of particles constituting the solid portion of the para-copolymerized aromatic polyamide and the particles in the treatment solution is 66 wt% or greater, is applied onto a substrate to form a film.

11. A method for producing a laminate according to claim 7 or 8, wherein a treatment solution containing a para-copolymerized aromatic polyamide, particles and an organic solvent, in which the proportion of particles constituting the solid portion of the para-copolymerized aromatic polyamide and the particles in the treatment solution is 66 wt% or greater, is applied onto a substrate and integrated with it.

12. The method according to claim 10 or 11, wherein the proportion of particles constituting the solid portion of the treatment solution is 75 to 99 wt%.
